# EUROPEAN PATENT SPECIFICATION

(11) **EP 2 663 388 B1**
(45) Date of publication and mention of the grant of the patent: **23.10.2019**
(21) Application number: 12708695.7
(22) Date of filing: 13.01.2012
(51) Int. Cl.: B01D 61/50, B01D 63/08

(54) **AN ELECTRO-MEMBRANE SEPARATION SYSTEM**
ELEKTROMEMBRANEN-TRENNSYSTEM
SYSTÈME DE SÉPARATION À ÉLECTRO-MEMBRANES

(30) Priority: 13.01.2011 DK 201170018; 13.01.2011 US 201161432347 P
(43) Date of publication of application: 20.11.2013
(73) Proprietor: Carlsberg A/S, 1799 Copenhagen V (DK)
(72) Inventor: RYPE, Jens-Ulrik, DK-2820 Gentofte (DK); GARDE, Arvid, DK-3400 Hillerød (DK)
(74) Representative: Høiberg P/S
(86) International application number: PCT/EP2012/050472
(87) International publication number: WO 2012/095506

(56) References cited:
- EP-A1- 0 500 505
- EP-A2- 0 219 083
- EP-A2- 1 000 654
- WO-A1-92/03216
- DE-A1- 3 441 249
- DE-A1- 19 945 978
- US-A- 3 291 716
- US-A1- 2006 125 187

## Description

### INTRODUCTION

The present invention relates to the use of a membrane separation system comprising a plurality of compartments each formed within a corresponding flange of a spacer in an electro-membrane separation process. The compartments are separated from each other by membranes which are arranged between the spacers side by side in a thickness direction.

The system comprises at least one manifold for distribution of process fluid in the compartments, the manifold communicating with each compartment via a connection structure provided in the corresponding flange.

### BACKGROUND

Membrane separation covers various processes such as Electro-membrane filtration such as electrodialysis (ED) or electrodialysis with bipolar membranes (EDBM), and dialysis such as Donnan dialysis.

In multi-compartment separation processes, stacks are generally built of membrane sheets separated from each other by suitably configured gaskets so that spaces between each membrane are sealed by the gaskets.

For efficient separations, the distance, i.e. the gap between the sheets is small and for practical reasons, the gaskets are typically constituted by spacers introduced between the individual membrane sheets. The spacers support the membranes and control a liquid flow distribution in the compartment between the membranes.

The stacks are typically assembled between opposite end plates which are pressed towards each other whereby the spacers and membranes are compressed against each other. The stack includes flow channels for distribution of liquids to be treated to each of the spaces between the membranes, see e.g. US 6,537,436.

Typical spacers of similar function for electro-membrane processes employ the surrounding membranes as sealing elements between opposite spacer flanges and in most cases, also the around the circumference of the spacers' manifold apertures (US 3,761,386; US 4,172,779; US 5,185,048). The distribution channels connecting the manifold system with the inner screen are typically open channels with or without a supporting matrix, typically in the form a polymer net structure, to support the sealing membrane on both sides.

A typical weakness of known systems is the poor support of the sealing membranes at the distribution channels in the spacer flanges when pressed together in a plate-and-frame system, and is known to have a tendency towards leakage internally between the two compartments separated by the membrane. Furthermore, using the membranes made with appropriate apertures for sealing of the circumference of the manifold apertures between the spacers offer poor sanitary sealing in most cases, since it is practically impossible to align membrane and spacer apertures perfectly for a sanitary design.

US 4,786,393; US 4,999,107 suggest solutions to reduce or limit the leakage problems by making multilayered spacers structures, combined hard materials for mechanical support and soft materials for effective sealing. Microscopic irregularities, fissures, or de-lamination between the separate layers of multilayered spacer structures can prove difficult to clean and sanitize, which makes such a design problematic for aseptic use of the system.

### SUMMARY

The invention is defined by the appended claims.

The present invention relates to the use of a membrane separation system in an electro-membrane separation process, said system comprising a plurality of compartments each being formed within a corresponding flange of a spacer (11, 12) and being separated from each other by membranes which are arranged between the spacers side by side in a thickness direction, the system comprising at least one manifold for distribution of process fluid in the compartments, the manifold communicating with each compartment (00, 07) via a connection structure provided in the corresponding flange, wherein each connection structure comprises at least one conduit formed in the corresponding flange and enclosed between opposite outer surfaces of the flange, the flange of each spacer extends about an open screen comprising ribs which, in combination with the two adjacent membranes, form a predefined flow path across the corresponding compartment, wherein the flange has a thickness being larger than the thickness of the ribs of the flow spacer, the thickness being defined as a dimension in the thickness direction, characterised in that in that the membranes comprise an uncompressed part between ribs of two adjacent spacers and a part which is compressed between the flanges of the adjacent spacers, the membrane being compressed to an extent where a distance between the ribs of the adjacent spacers in the thickness direction corresponds to the thickness of the un-compressed part of the membrane, and in that compression of the system in the thickness direction is sufficient to provide a seal between adjacent flanges and membranes and between adjacent ribs and membranes.

### DETAILED DESCRIPTION

It is an object of the present invention to improve separation between process and dialysate fluid in an electro-membrane filtration system and to provide a stack which is easy to assemble, disassemble, clean and operate and which can be used for sanitary and aseptic operations.

A system of the kind mentioned in the introduction is provided wherein each connection structure comprises at least one conduit formed in the corresponding flange and enclosed between opposite outer surfaces of the flange.

In this way, the flanges may form sealed and/or plane outer surfaces which provide a good separation of the fluids in each chamber from fluids in adjacent chambers.

Accordingly, the system according to the present disclosure improves sterility and facilitates use of the separation system e.g. in pharmaceutical production, food industry and in other fields where complete separation between process fluids is desired.

The system may comprise spacers of a first type forming first compartments for a first process fluid and spacers of a second type forming second compartments for a second process fluid. In this case:
- a first manifold may communicate with the first compartments via a first connection structure provided in flanges of spacers of the first type;
- a second manifold may communicate with the first compartments via a second connection structure provided in flanges of spacers of the first type;
- a third manifold may communicate with the second compartments via a third connection structure provided in the flanges of spacers of the second type; and
- a fourth manifold communicates with the second compartments via a fourth connection structure provided in the flanges of spacers of the second type.

Each manifold may be formed by cooperating apertures formed in the flange of each spacer.

The elastically compressible sealing elements may be arranged in at least one of the apertures in each flange.

Each spacer may comprise a flange extending about an open screen which facilitates distribution of a process fluid in the corresponding compartment. In this regards, open means that the screen allow flow of the process fluid across the screen, i.e. it is permeable towards the process fluid.

The open screen can be empty except for the process fluid during operation.

The open screen can hold a support matrix, which function is to support the membranes extending across the opposite sides of the open screen in order to avoid the membranes from touching each other, or to affect the flow conditions of the process fluid passing through the inner, open screen, or both. The support matrix can e.g. be in the form of a polymer net, supporting the membranes and promoting turbulent flow in the open screen.

It may be an advantage to ensure a certain flow path along the membrane. In particular, it may be an advantage to ensure spreading of the fluid a large portion of the surface of the membrane. It may further be an advantage to facilitate a turbulent flow. For one of these purposes, the screen may include elements which are capable of interfering with the flow. Typically such elements may include ribs, e.g. shaped such that a plurality of interconnected cells is formed in the compartments.

The ribs or cells may specifically form a tortuous-path, which offers homogenous flow, well-defined retention time, and no dead zones for the process fluid.

Generally, the cells may be arranged in one, two or more groups where a liquid is allowed to flow from an inlet into the compartment to an outlet out of the compartment between each cell so that the fluid is forced to change its flow direction between each cell.

Contact between the ribs and the adjacent membranes may be provided to form at least a substantially liquid tight cell in which the liquid can flow between the end portions where the liquid is received from a previous cell and where the liquid is delivered to a subsequent cell. For this purpose, the flange may be larger in the thickness direction than the ribs.

The mentioned contact between the ribs and membranes can be obtained by selecting specific dimensions for the flange, ribs and membranes. E.g. by having ribs of a dimension in the thickness direction either corresponding to that dimension of the flange or possibly smaller than the flange.

If the ribs are smaller than the flange in the thickness direction, the membranes of the system can be compressed between two adjacent flanges until the ribs of the spacers come in contact with adjacent membranes and the mentioned cells-structure can be formed with a good seal both between adjacent flanges and membranes and between the ribs and membranes forming the cells in the screen.

The grid may in particular comprise ribs extending in a flow direction being transverse or perpendicular to a flow direction between the ports so that the liquid in each cell flows in a direction transverse or even perpendicular to the direction between the ports.

The outer surfaces of each flow spacer or at least the outer surfaces of the flanges may form a substantially planar surface towards an adjacent flow spacer. The flange may further form an edge protruding from the surface towards the adjacent flow spacer and extending around the screen. The edge may have a height over the surface in the range of 0.01 to 1 mm and a width in the range of 0.01 to 2 mm. The edge may e.g. have a curved or arched cross-section.

By means of the protruding edge, the gap between adjacent membranes and spacers can be sealed effectively by the increased surface pressure occurring between the protruding edge and the membrane when the flanges are compressed on opposite sides of the membranes. Depending on the characteristics of the edge and membrane, the membrane and/or the edge may even be deformed by the compression of the spacers against the membranes, e.g. by depression of the edge into the surface of the membrane.

The inlet apertures of adjacent spacers may have different sizes so that gaskets can be arranged in the radial gap between the edges of two adjacent apertures. In this way it becomes possible to provide a seal between adjacent spacers by use of regular gaskets such as neoprene or rubber gaskets and undesired contamination of liquids from the inlet or outlet ducts into the space between adjacent spacers and membranes may be prevented. For this purpose, the apertures may e.g. be circular, quadrangular with rounded corners, oval or any similar shape, preferably with non-sharp edges, and cooperating apertures of adjacent spacers may be aligned so that the centres of the apertures are along a straight line. The difference in size may e.g. constitute support for a sealing element for sealing the manifold apertures between spacers of equal type and which has a thickness in the range of 30-50% larger than the combined thickness of two membranes and one spacer.

To provide a hard outer surface of the flanges whereby the flanges can be compressed hardly towards each other on opposite sides of the membranes, and optionally to ensure depression of the protruding edges into the surface of the membranes, the flange may have a relatively high surface hardness. To simultaneously ensure that the membranes come in close contact with the ribs in the screen, the ribs may have a comparable lower surface hardness and they could optionally be made from a material different from that of the flange.

The flange is made from a material which sustains high temperature, e.g. temperatures above 100 degrees Celsius or even temperatures above 130 degrees Celsius. In this way, cleaning or sterilisation may be performed by use of steam or warm liquid. The material of the spacers could e.g. be selected from the group consisting of polyetheretherketone (PEEK), polysulfone (PSU), polyvinylchloride (PVC), polyethylene (PE), polypropylene (PP), polyimide (PI) etc.

The spacers could also be made from different materials, e.g. material which are joined, e.g. laminated layers including layers of different materials, or layers of one material coated with another material, e.g. plastic coated metal etc.

The spacers could be made in one piece e.g. by injection moulding so that opposite parallel outer surfaces of the flange are formed against inner surfaces of a mould. In that way, parallel outer flange surface, and preferably smooth surfaces may be obtained.

If the spacers are cast as a single element in a hard material with enclosed conduits forming the connection structure, sufficient sealing support for a complete leak-free flow spacer may be provided.

The connection structure may be formed with rounded holes for optimal sanitary cleaning, and the use for sealing elements in the manifold apertures ensures a uniform and sanitary manifold system.

The presence of a soft packaging material between the hard spacer flange and the membrane are made unnecessary by the presence of the aforementioned thin protruding edge on the otherwise smooth surface of the spacer's flange.

A flow spacer for an electro-membrane separation system is also described. The spacer comprises a flange forming an inner edge about an open screen and four apertures formed in the flange. Two of the apertures are connected with the inner edge by a conduit enclosed between opposite outer surfaces of the flange.

The present invention provides the use of a system as previously described for separating a dialysate fluid from a process fluid in an electro-membrane filtration process.

### DETAILED DESCRIPTION OF EMBODIMENTS OF THE DISCLOSURE

Further scope of applicability of the present disclosure will become apparent from the following detailed description and specific examples with reference to the drawings in which:
Fig. 1 illustrates in an exploded view, a system according to the present disclosure;
Fig. 2 illustrates a system when the spacers and membranes are compressed against each other;
Fig. 3 illustrates a spacer according to the present disclosure; and
Figs. 4 and 5 illustrate enlarged view of two different spacers of the system; and
Fig. 6 illustrates a spacer in a cross-section.

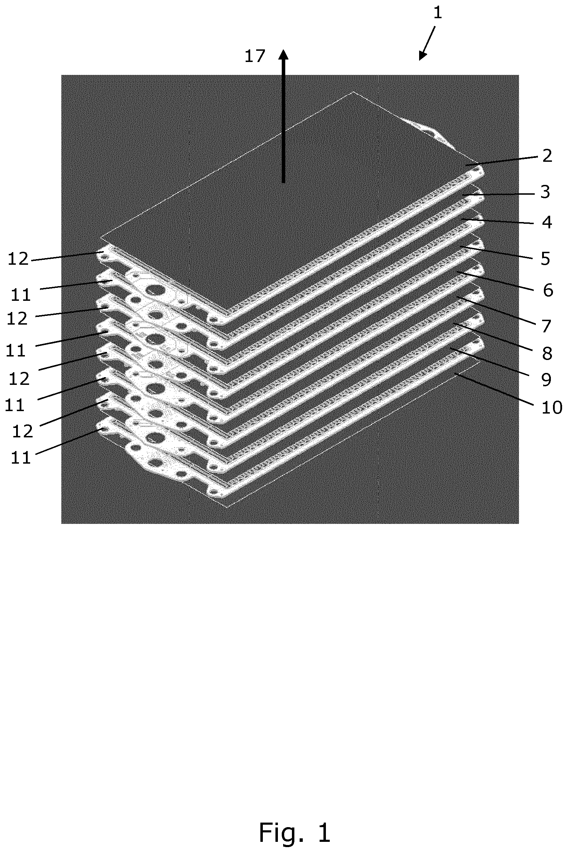

Fig. 1 illustrates a membrane separation system 1 comprising membranes 2-10 arranged between flow spacers 11, 12 side by side in a thickness direction which is illustrated by the arrow 17.

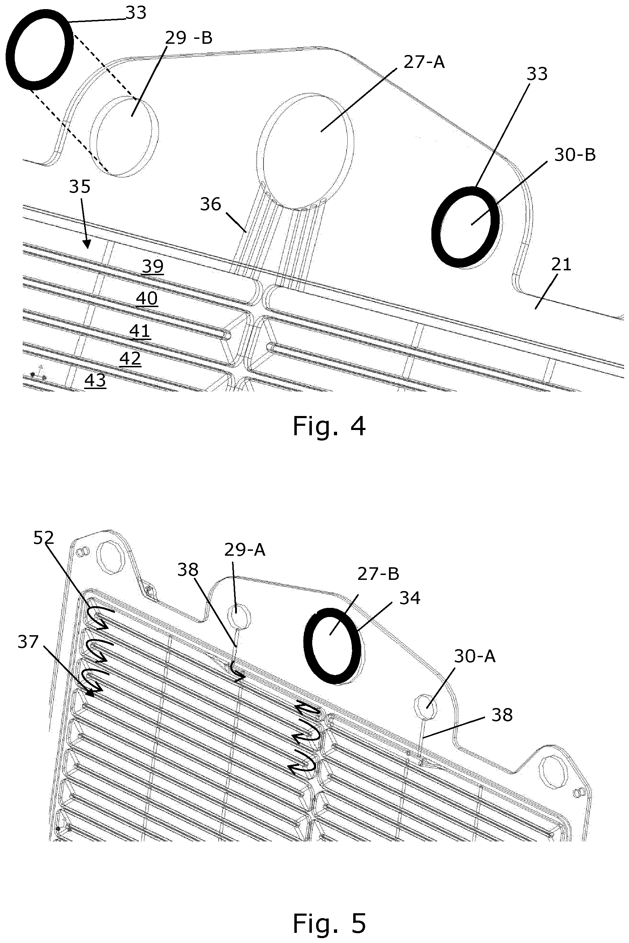

A plurality of compartments is formed between the membranes 2-10. Due to a difference between every second flow spacer, the compartments becomes of either a first compartment type for a first process fluid or of a second compartment type for a second process fluid. The difference between the two different types of flow spacer will be described with reference to Figs. 4 and 5.

The membranes 2-10 may be identical membranes, pair-wise identical membranes or individual membranes with different characteristics.

The compartments are separated by the membranes 2-10. The membranes may be identical membranes, pair wise identical membranes or the membranes may be individually made and different from the other membranes.

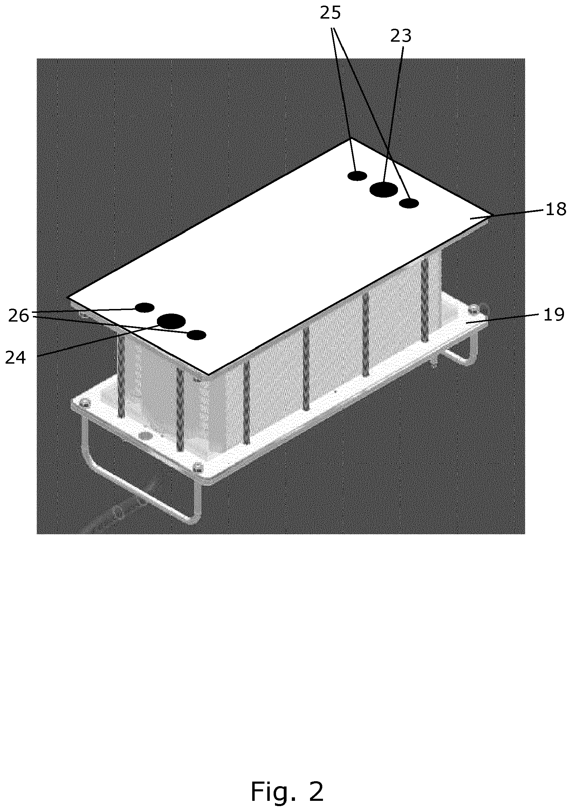

Fig. 2 illustrates a system when the spacers and membranes are compressed against each other between two end-plates 18, 19. The end plates form connections to inlet ducts and outlet ducts for the first and second process fluids. The fluids may e.g. be a general process fluid and a dialysate fluid - herein we refer to both fluids as being process fluids.

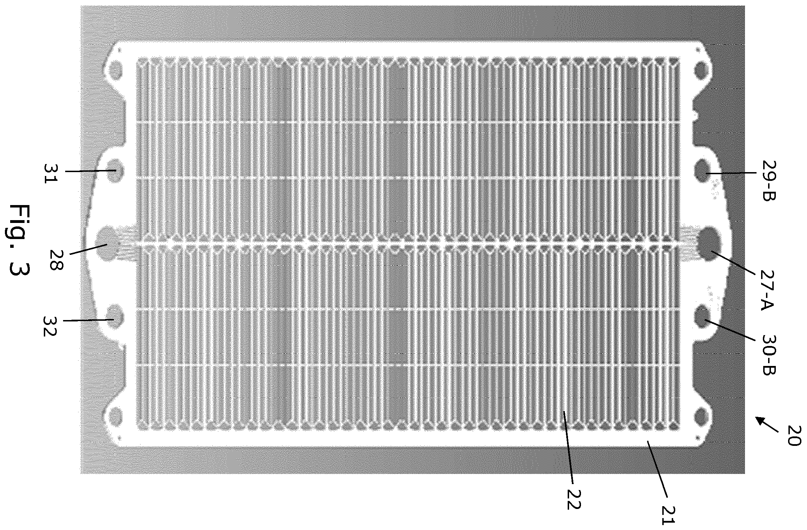

Fig. 3 illustrates a spacer 20, and Figs. 4 and 5 illustrate enlarged views of a top portion of two different types of spacers.

Each flow spacer in the system forms an impermeable flange 21 extending about a permeable screen 22. The screen serves to distribute the process fluids in the compartments between the membranes. The screen is optional, and the spacer may simply have an open centre portion within the flange 21, or the spacer may have any structure which may be suitable for separating two adjacent membranes in the system, e.g. a matrix structure which separates the membranes and also allows a fluid flow along the membranes.

Referring now to Fig. 2, the system comprises a first manifold 23 forming at least one inlet for the first process fluid, a second manifold 24 forming at least one outlet for the first process fluid, a third manifold 25 forming at least one inlet for the second process fluid, and a fourth manifold 26 forming at least one outlet for the second process fluid.

The manifolds are formed by cooperating apertures formed in the flange of each spacer.

Fig. 3 illustrates a spacer of a first type, herein the apertures 27-A, 28 participate in forming the first and second manifolds and the apertures 29-32 participate in forming the third and fourth manifolds.

Fig. 4 illustrates an enlarged view of the top portion of the spacer in Fig. 3, i.e. a spacer of the first type, herein referred to as first spacer 11, c.f. Fig. 1. In this type of spacer, the first manifold communicates with the compartments of the first type, i.e. the first compartments 35, via a first connection structure 36 provided in the flange 21 of the spacer. The first connection structure 36 extends between the aperture 27-A and the compartment 35.

Sealing elements 33 may be arranged along a rim portion of the apertures 29-B, 30-B. The sealing elements facilitate sealing of the second liquid manifold 25 between two adjacent spacers of the second type.

A second connection structure (not shown) provided in the opposite end of the flange of the spacers of the first type provides communication between the second manifold and the first compartments. The second connection structure, which may be essentially identical to the first connection structure (c.f. also Fig. 3), extends between the aperture 28 and the compartment 35. Sealing elements may be arranged along a rim portion of the apertures 31, 32. The sealing elements facilitate sealing of the second liquid manifold 26 between two adjacent spacers of the second type.

Fig. 5 illustrates an enlarged view of the top portion of the spacer of the second type, herein referred to as second spacer 12, c.f. Fig. 1.

In this type of spacer, the third manifold communicates with the compartments of the second type, i.e. the second compartments 37, via a third connection structure 38 provided in flanges 21 of the spacer. The third connection structure 38 extends between the apertures 29, 30 and the compartment 37.

Sealing element 34 may be arranged to facilitate sealing of first liquid manifold 23 between two adjacent spacers of the first type, can be fixed inside the aperture 27-B.

A fourth connection structure (not shown) provided in the opposite end of the flange of the spacers of the second type provides communication between the fourth manifold and the second compartments. The fourth connection structure extends between the aperture 31, 32 and the compartment 37. Sealing element to facilitate sealing of first liquid manifold 24 between two adjacent spacers of the first type surrounding this spacer of the second type can be fixed inside the aperture 28.

Each connection structure is formed as a number of channels which extend between opposite outer surfaces of the flange 21. In that way, the connection structure provides completely tight fluid communication between the manifolds and the compartments, and the conduits becomes thereby separate from the conduit of the adjacent flow spacer.

As seen most clearly in Fig. 4, the screen comprises ribs which, in combination with the two adjacent membranes, form a row of serially connected cells 39-43. The cells are formed to force a direction change of the fluid each time it flows between two adjacent cells. The predefined flow direction defined by the ribs is illustrated by the arrow 52, c.f. Fig. 5.

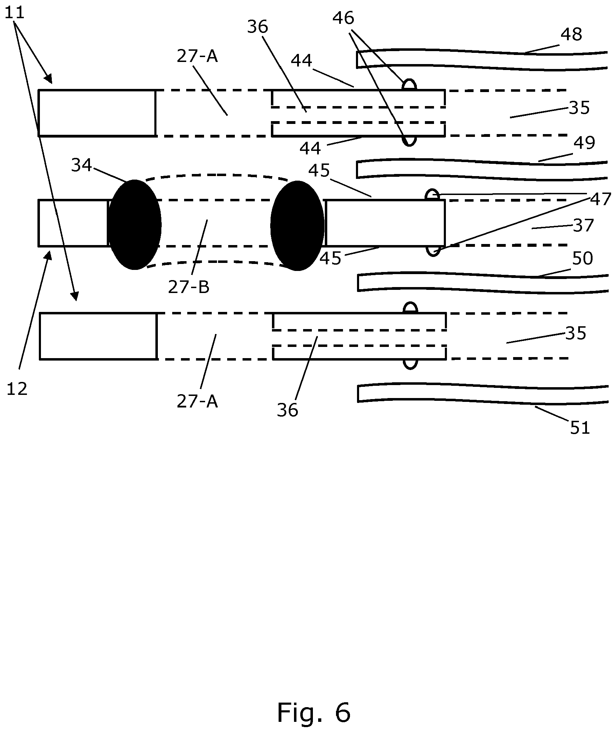

Fig. 6 partly illustrates cross-sections of the two types of spacers 11 and 12 with the manifold system and protruding edge. The manifold aperture 27-A in spacers of the first type 11 is centre-aligned up against the manifold aperture 27-B in spacers of the second type 12. A sealing element 34 placed in aperture 27-B ensures compete sealing of the connecting and repeating manifold apertures 27-A and 27-B, which together with the external connection manifold in the endplates form the manifold 23.

On the generally flat, planar outer surfaces 44, 45 the flange of each flow spacer forms an edge 46, 47 protruding from the surface towards the adjacent flow spacer and located on the surface between the inner screen 35, 37 and the manifold apertures 27-32. The edge 46, 47 extends all the way about the screen and improves the ability of the spacer to compress an adjacent membrane 48-51 and thus tightly seals the inner screen.

## Claims

1. Use of a membrane separation system (1) in an electro-membrane separation process, said system comprising a plurality of compartments (35, 37) each being formed within a corresponding flange (21) of a spacer (11, 12) and being separated from each other by membranes (2, 3, 4, 5, 6, 7, 8, 9, 10) which are arranged between the spacers (11, 12) side by side in a thickness direction (17), the system comprising at least one manifold (23, 24, 25, 26) for distribution of process fluid in the compartments (35, 37), the manifold (23, 24, 25, 26) communicating with each compartment (35, 37) via a connection structure (36, 38) provided in the corresponding flange, wherein each connection structure comprises at least one conduit formed in the corresponding flange and enclosed between opposite outer surfaces of the flange, the flange (21) of each spacer extends about an open screen (22) comprising ribs which, in combination with the two adjacent membranes, form a predefined flow path across the corresponding compartment, wherein the flange has a thickness being larger than the thickness of the ribs of the flow spacer, the thickness being defined as a dimension in the thickness direction, **characterised in that in that** the membranes comprise an uncompressed part between ribs of two adjacent spacers and a part which is compressed between the flanges of the adjacent spacers, the membrane being compressed to an extent where a distance between the ribs of the adjacent spacers in the thickness direction corresponds to the thickness of the un-compressed part of the membrane, and **in that** compression of the system in the thickness direction is sufficient to provide a seal between adjacent flanges and membranes and between adjacent ribs and membranes.

2. The use according to claim 1, wherein the system comprises spacers of a first type (11) forming first compartments (35) for a first process fluid and spacers of a second type (12) forming second compartments (37) for a second process fluid , wherein
- a first manifold (23) communicates with the first compartments (35) via a first connection structure (36) provided in flanges of spacers of the first type;
- a second manifold (24) communicates with the first compartments (35) via a second connection structure provided in flanges of spacers of the first type;
- a third manifold (25) communications with the second compartments (37) via a third connection structure (38) provided in the flanges of spacers of the second type; and
- a fourth manifold (26) communicates with the second compartments (37) via a fourth connection structure provided in flanges of spacers of the second type.

3. The use according to any of the preceding claims, wherein each manifold (23, 24, 25, 26) is formed by cooperating apertures (27-A, 27-B, 28, 29-A, 29-B, 30-A, 30-B, 31, 32) formed in the flange (21) of each spacer.

4. The use according to claim 3, wherein the system comprises elastically compressible sealing elements arranged in at least one of the apertures in each flange.

5. The use according to any of the preceding claims, wherein the open screen holds a support structure for keeping membranes on opposite sides of the open screen physically separated but allows liquid to flow between inlet and outlet opening.

6. The use according to any of the preceding claims, wherein the flange has a surface hardness which is higher than the surface hardness of the ribs.

7. The use according to any of the preceding claims, wherein the ribs form a row of serially connected cells, the cells being arranged so that a liquid flowing between the cells changes flow direction between each cell.

8. The use according to any of the preceding claims, wherein the ribs are joined by girders which are smaller in the thickness direction than the ribs whereby the girders form passages between each cell in the chamber.

9. The use according to any of the preceding claims, wherein each spacer forms at least one communication opening for inlet of a process fluid and at least one communication opening for outlet of the process fluid, the openings for inlet and outlet being arranged in opposite ends of the flange.

10. The use according to any of the preceding claims, wherein the flange of each flow spacer forms a substantially planar surface towards an adjacent flow spacer, the flange further forming an edge protruding from the surface towards the adjacent flow spacer.

11. The use according to claim 10, wherein the edge compresses an adjacent membrane.

12. The use according to any of the preceding claims, wherein each spacer is made in one piece by injection moulding so that opposite parallel outer surfaces of the flange are formed against inner surfaces of a mould.

## Patentansprüche

1. Verwendung eines Membranen-Trennsystems (1) in einem Elektromembranen-Trennprozess, wobei das System eine Vielzahl von Fächern (35, 37) umfasst, wobei jedes innerhalb eines entsprechenden Flansches (21) eines Abstandhalters (11, 12) ausgebildet ist und sie durch Membranen (2, 3, 4, 5, 6, 7, 8, 9, 10) voneinander getrennt sind, die in einer Dickenrichtung (17) Seite an Seite zwischen den Abstandhaltern (11, 12) angeordnet sind, wobei das System mindestens einen Verteiler (23, 24, 25, 26) zum Verteilen von Prozessfluid in den Fächern (35, 37) umfasst, wobei der Verteiler (23, 24, 25, 26)über eine Verbindungsstruktur (36, 38) mit jedem Fach (35, 37) verbunden ist, die in dem entsprechenden Flansch bereitgestellt ist, wobei jede Verbindungsstruktur mindestens eine Leitung umfasst, die in dem entsprechenden Flansch ausgebildet ist und zwischen gegenüberliegenden Außenflächen des Flansches eingeschlossen ist, wobei sich der Flansch (21) jedes Abstandhalters um ein offenes Sieb (22) erstreckt, das Rippen umfasst, die in Kombination mit den beiden benachbarten Membranen einen vordefinierten Strömungsweg durch das entsprechende Fach ausbilden, wobei der Flansch eine Dicke aufweist, die größer als die Dicke der Rippen des Strömungsabstandhalters ist, wobei die Dicke als eine Abmessung in der Dickenrichtung definiert ist, **dadurch gekennzeichnet, dass** die Membranen einen nicht zusammengedrückten Teil zwischen Rippen von zwei benachbarten Abstandhaltern und einen Teil umfassen, der zwischen den Flanschen von benachbarten Abstandhaltern zusammengedrückt ist, wobei die Membran in einem Ausmaß zusammengedrückt ist, in welchem ein Abstand zwischen den Rippen von benachbarten Abstandhaltern in der Dickenrichtung der Dicke des nicht zusammengedrückten Teils der Membran entspricht, und dadurch, dass das Zusammendrücken des Systems in der Dickenrichtung ausreicht, um eine Dichtung zwischen benachbarten Flanschen und Membranen und zwischen benachbarten Rippen und Membranen bereitzustellen.

2. Verwendung nach Anspruch 1, wobei das System Abstandhalter eines ersten Typs (11) zum Ausbilden von ersten Fächern (35) für ein erstes Prozessfluid und Abstandhalter eines zweiten Typs (12) zum Ausbilden zweiter Fächer (37) für ein zweites Prozessfluid umfasst, wobei
- ein erster Verteiler (23) mit den ersten Fächern (35) über eine erste Verbindungsstruktur (36) verbunden ist, die in Flanschen der Abstandhalter des ersten Typs bereitgestellt ist;
- ein zweiter Verteiler (24) mit den ersten Fächern (35) über eine zweite Verbindungsstruktur verbunden ist, die in Flanschen der Abstandhalter des ersten Typs bereitgestellt ist;
- ein dritter Verteiler (25) mit den zweiten Fächern (37) über eine dritte Verbindungsstruktur (38) verbunden ist, die in Flanschen der Abstandhalter des zweiten Typs bereitgestellt ist; und
- ein vierter Verteiler (26) mit den zweiten Fächern (37) über eine vierte Verbindungsstruktur verbunden ist, die in Flanschen der Abstandhalter des zweiten Typs bereitgestellt ist.

3. Verwendung nach einem der vorhergehenden Ansprüche, wobei jeder Verteiler (23, 24, 25, 26) durch zusammenwirkende Durchlässe (27-A, 27-B, 28, 29-A, 29-B, 30-A, 30-B, 31, 32) ausgebildet ist, die im Flansch (21) jedes Abstandhalters ausgebildet sind.

4. Verwendung nach Anspruch 3, wobei das System elastisch zusammendrückbare Dichtelemente umfasst, die in mindestens einem der Durchlässe in jedem Flansch angeordnet sind.

5. Verwendung nach einem der vorhergehenden Ansprüche, wobei das offene Sieb eine Stützstruktur hält, um Membranen an gegenüberliegenden Seiten des offenen Siebs physisch getrennt zu halten, aber ermöglicht, dass eine Flüssigkeit zwischen einer Einlass- und Auslassöffnung strömt.

6. Verwendung nach einem der vorhergehenden Ansprüche, wobei der Flansch eine Oberflächenhärte aufweist, die höher als die Oberflächenhärte der Rippen ist.

7. Verwendung nach einem der vorhergehenden Ansprüche, wobei die Rippen eine Reihe von seriell verbundenen Zellen ausbilden, wobei die Zellen so angeordnet sind, dass eine Flüssigkeit, die zwischen den Zellen strömt, die Strömungsrichtung zwischen jeder Zelle ändert.

8. Verwendung nach einem der vorhergehenden Ansprüche, wobei die Rippen durch Träger verbunden sind, die in der Dickenrichtung kleiner als die Rippen sind, wodurch die Träger Passagen zwischen jeder Zelle in der Kammer ausbilden.

9. Verwendung nach einem der vorhergehenden Ansprüche, wobei jeder Abstandhalter mindestens eine Verbindungsöffnung zum Einlassen eines Prozessfluids und mindestens eine Verbindungsöffnung zum Auslassen des Prozessfluids ausbildet, wobei die Öffnungen zum Einlassen und Auslassen in gegenüberliegenden Enden des Flanschs angeordnet sind.

10. Verwendung nach einem der vorhergehenden Ansprüche, wobei der Flansch jedes Strömungsabstandhalters eine im Wesentlichen ebene Oberfläche in Richtung eines benachbarten Strömungsabstandhalters ausbildet, wobei der Flansch ferner eine Kante ausbildet, die von der Oberfläche in Richtung des benachbarten Strömungsabstandhalters hervorsteht.

11. Verwendung nach Anspruch 10, wobei die Kante eine benachbarte Membran zusammendrückt.

12. Verwendung nach einem der vorhergehenden Ansprüche, wobei jeder Abstandhalter durch Spritzgießen einstückig hergestellt ist, sodass gegenüberliegende parallele Außenflächen des Flansches gegen Innenflächen einer Gussform ausgebildet werden.

## Revendications

1. Utilisation d'un système de séparation à membranes (1) dans un procédé de séparation à électro-membranes, ledit système comprenant une pluralité de compartiments (35, 37) formés chacun à l'intérieur d'une bride correspondante (21) d'une entretoise (11, 12) et étant séparés les uns des autres par des membranes (2, 3, 4, 5, 6, 7, 8, 9, 10) qui sont agencées côte à côte dans un sens de l'épaisseur (17) entre les entretoises (11, 12), le système comprenant au moins un collecteur (23, 24, 25, 26) pour la distribution de fluide de traitement dans les compartiments (35, 37), le collecteur (23, 24, 25, 26) communiquant avec chaque compartiment (35, 37) par l'intermédiaire d'une structure de raccordement (36, 38) prévue dans la bride correspondante, dans laquelle chaque structure de raccordement comprend au moins un conduit formé dans la bride correspondante et enfermé entre des surfaces extérieures opposées de la bride, la bride (21) de chaque entretoise s'étend autour d'un tamis ouvert (22) comprenant des nervures qui, en combinaison avec les deux membranes adjacentes, forment un trajet d'écoulement prédéfini à travers le compartiment correspondant, dans laquelle la bride a une épaisseur supérieure à l'épaisseur des nervures de l'entretoise d'écoulement, l'épaisseur étant définie en tant que dimension dans le sens de l'épaisseur, **caractérisée en ce que** les membranes comprennent une partie non comprimée entre des nervures de deux entretoises adjacentes et une partie comprimée entre les brides des entretoises adjacentes, la membrane étant comprimée dans une mesure telle qu'une distance entre les nervures des entretoises adjacentes dans le sens de l'épaisseur correspond à l'épaisseur de la partie non comprimée de la membrane, et **en ce que** la compression du système dans le sens de l'épaisseur est suffisante pour assurer une étanchéité entre des brides et des membranes adjacentes et entre des nervures et des membranes adjacentes.

2. Utilisation selon la revendication 1, dans laquelle le système comprend des entretoises d'un premier type (11) formant des premiers compartiments (35) pour un premier fluide de traitement et des entretoises d'un second type (12) formant des seconds compartiments (37) pour un second fluide de traitement, dans laquelle
- un premier collecteur (23) communique avec les premiers compartiments (35) par l'intermédiaire d'une première structure de raccordement (36) prévue dans des brides d'entretoises du premier type ;
- un deuxième collecteur (24) communique avec les premiers compartiments (35) par l'intermédiaire d'une deuxième structure de raccordement prévue dans des brides d'entretoises du premier type ;
- un troisième collecteur (25) communique avec les seconds compartiments (37) par l'intermédiaire d'une troisième structure de raccordement (38) prévue dans les brides d'entretoises du second type ; et
- un quatrième collecteur (26) communique avec les seconds compartiments (37) par l'intermédiaire d'une quatrième structure de raccordement prévue dans des brides d'entretoises du second type.

3. Utilisation selon l'une quelconque des revendications précédentes, dans laquelle chaque collecteur (23, 24, 25, 26) est formé par des ouvertures coopérantes (27-A, 27-B, 28, 29-A, 29-B, 30-A, 30-B, 31, 32) formées dans la bride (21) de chaque entretoise.

4. Utilisation selon la revendication 3, dans laquelle le système comprend des éléments d'étanchéité élastiquement compressibles agencés dans au moins l'une des ouvertures de chaque bride.

5. Utilisation selon l'une quelconque des revendications précédentes, dans laquelle le tamis ouvert contient une structure de support pour maintenir les membranes sur les côtés opposés du tamis ouvert physiquement séparées, mais permet au liquide de s'écouler entre l'ouverture d'entrée et de sortie.

6. Utilisation selon l'une quelconque des revendications précédentes, dans laquelle la bride a une dureté de surface qui est supérieure à la dureté de surface des nervures.

7. Utilisation selon l'une quelconque des revendications précédentes, dans laquelle les nervures forment une rangée de cellules reliées en série, les cellules étant agencées de sorte qu'un liquide s'écoulant entre les cellules change de direction d'écoulement entre chaque cellule.

8. Utilisation selon l'une quelconque des revendications précédentes, dans laquelle les nervures sont reliées par des poutres qui sont plus petites dans le sens de l'épaisseur que les nervures, moyennant quoi les poutres forment des passages entre chaque cellule de la chambre.

9. Utilisation selon l'une quelconque des revendications précédentes, dans laquelle chaque entretoise forme au moins une ouverture de communication pour l'entrée d'un fluide de traitement et au moins une ouverture de communication pour la sortie du fluide de traitement, les ouvertures pour l'entrée et la sortie étant agencées à des extrémités opposées de la bride.

10. Utilisation selon l'une quelconque des revendications précédentes, dans laquelle la bride de chaque entretoise d'écoulement forme une surface sensiblement plane vers une entretoise d'écoulement adjacente, la bride formant en outre un bord faisant saillie depuis la surface vers l'entretoise d'écoulement adjacente.

11. Utilisation selon la revendication 10, dans laquelle le bord comprime une membrane adjacente.

12. Utilisation selon l'une quelconque des revendications précédentes, dans laquelle chaque entretoise est fabriquée d'une seule pièce par moulage par injection de sorte que des surfaces extérieures parallèles opposées de la bride sont formées contre les surfaces intérieures d'un moule.
